# EUROPÄISCHE PATENTSCHRIFT

(11) **EP 3 839 252 B1**
(45) Veröffentlichungstag und Bekanntmachung des Hinweises auf die Patenterteilung: **03.04.2024**
(21) Anmeldenummer: 20187952.5
(22) Anmeldetag: 27.07.2020
(51) Int. Cl.: F03D 13/10, F03D 80/50

(54) **MONTAGEVORRICHTUNG FÜR ROTORBLÄTTER EINER WINDENERGIEANLAGE**
MOUNTING DEVICE FOR ROTOR BLADES OF A WIND ENERGY SYSTEM
DISPOSITIF DE MONTAGE POUR PALES DE ROTOR D'UNE ÉOLIENNE

(30) Priorität: 20.12.2019 DE 202019005213 U
(43) Veröffentlichungstag der Anmeldung: 23.06.2021
(73) Patentinhaber: Fuhrländer, Jürgen, 56477 Waigandshain (DE)
(72) Erfinder: Fuhrländer, Jürgen, 56477 Waigandshain (DE)
(74) Vertreter: advotec.

(56) Entgegenhaltungen:
- WO-A1-2019/080980
- US-A1- 2007 290 426
- US-A1- 2012 137 481
- US-A1- 2014 360 015
- US-A1- 2016 010 622

## Beschreibung

Die Erfindung betrifft eine Montagevorrichtung für Rotorblätter einer Windenergieanlage mit einer Lastwindeneinrichtung, einer Führungswindeneinrichtung, einer Anschlusseinrichtung zur Verbindung mit einer Rotornabe der Windenergieanlage und einer mit dem Rotorblatt verbindbaren Führungseinrichtung, wobei die Anschlusseinrichtung eine Seilumlenkeinrichtung zur Umlenkung von zumindest einem mit einer Rotorblattwurzel verbundenen und auf der Lastwindeneinrichtung aufgenommenen Lastseil einer Lastseilanordnung und eine Anschlageinrichtung zur Verbindung von zumindest einem auf der Führungswindeneinrichtung aufgenommenen Führungsseil einer Führungsseilanordnung mit der Rotornabe aufweist.

Windenergieanlagen werden in zunehmender Größe errichtet, um entsprechend größere Leistungen erzielen zu können. Hierdurch ergeben sich entsprechend größere Rotordurchmesser, verbunden mit gesteigerten Nabenhöhen der Windenergieanlagen, wobei bereits bei den aktuell installierten Windenergieanlagen oftmals Nabenhöhen größer als 130 Meter erreicht werden. Zur Montage bzw. Demontage der Rotorblätter ist es bislang üblich, Großkrane einzusetzen, die eine Nennlast von 1000 Tonnen und mehr aufweisen.

Abgesehen davon, dass Krane dieser Größenordnung nur in begrenzter Anzahl verfügbar sind, ist allein mit der Bereitstellung der Krane für einen Einsatz vor Ort ein erheblicher logistischer Aufwand verbunden, da die Krane üblicherweise aufgeteilt in Komponenten auf einer Vielzahl von LKW transportiert und vor Ort mit einem erheblichen Montageaufwand, der eine entsprechende Montagezeit von oftmals mehreren Tagen erforderlich macht, installiert werden müssen. Hinzu kommt, dass als Voraussetzung für eine Anlieferung und Installation der Komponenten geeignete Zuwegungen zu den Installationsorten geschaffen und eine entsprechend großflächige Montagefläche präpariert werden muss. Hieraus resultiert ein Platzverbrauch, der bei weitem über die für den Betrieb der Windenergieanlage benötigte Fläche hinausgeht, worin ein Grund für die häufig anzutreffende mangelnde Akzeptanz für die Errichtung von Windkraftanlagen in weiten Teilen der Bevölkerung gesehen werden kann.

Die vorstehend erwähnten großen Nabenhöhen an installierten Windenergieanlagen machen den Einsatz entsprechender Großkrane nicht nur bei der Errichtung von Windenergieanlagen erforderlich, sondern auch bei Reparatur- oder Wartungsarbeiten, die eine Demontage von Rotorblättern notwendig machen, um entsprechende Reparatur- oder Wartungsarbeiten, die nicht in montiertem Zustand der Rotorblätter durchgeführt werden können, am Boden durchführen zu können. Solche Arbeiten betreffen beispielsweise die an der Rotorblattwurzel ausgebildeten Rotorblattlager, welche eine Anstellwinkelverstellung der Rotorblätter ermöglichen.

Aus der US 2007/0290426 A1 ist eine Montagevorrichtung für Rotorblätter einer Windenergieanlage mit einem Lastseil bekannt, welches an einem Rotorblatt bzw. einer Rotorblattwurzel befestigt ist, und einem Führungsseil, welches nahe einem gegenüberliegenden Ende des Rotorblatts befestigt ist. Das Lastseil ist über eine Umlenkrolle an einer Nabe der Windenergieanlage geführt, so dass das Rotorblatt von einem Boden aus angehoben werden kann. Ein weiteres Seil ist zwischen der Nabe und dem Boden gespannt, wobei in etwa in einer Mitte dieses Seils eine Umlenkrolle befestigt ist, über die das Führungsseil läuft. Mit dem Führungsseil kann so das Rotorblatt bei einem Anheben ausgerichtet werden.

Die WO 2019/080980 A1 zeigt insbesondere eine weitere Montagevorrichtung für Rotorblätter einer Windenergieanlage. Neben einem Lastseil, welches über eine Nabe der Windenergieanlage geführt ist, sind Führungsseile vorgesehen, die an einem Ende des Rotorblatts angeordnet bzw. befestigt sind. Auch hier kann mittels der Führungsseile bei einem Absenken des Rotorblatts dieses in die dafür am Boden vorgesehene Position bewegt werden.

Die US 2016/0010622 A1 offenbart einen Rahmen, welcher temporär um einen Sockel eines Turms einer Windenergieanlage angeordnet werden kann. An dem Rahmen sind Winden sowie Kontergewichte angeordnet. Von dem Rahmen führen Lastseile zu einer Nabe der Windenergieanlage, über die ein Rotorblatt auf einen Boden abgesenkt werden kann.

Eine weitere derartige Montagevorrichtung ist aus der US 2014/0360015 A1 bekannt, wobei hier eine Winde mit einem Lastseil über eine Nabe einer Windenergieanlage mit einem Rotorblatt verbunden ist. Nahe einem Ende des Rotorblatts ist ein Führungsseil eines mobilen Krans angeordnet.

Der vorliegenden Erfindung liegt daher die Aufgabe zugrunde, eine Montagerichtung für Rotorblätter einer Windenergieanlage vorzuschlagen, die eine Montage oder Demontage der Rotorblätter mit einem vergleichsweise geringeren Aufwand ermöglicht.

Zur Lösung dieser Aufgabe weist die Erfindung die Merkmale des Anspruchs 1 auf.

Die erfindungsgemäße Montagevorrichtung für Rotorblätter einer Windenergieanlage umfasst eine Lastwindeneinrichtung, eine Führungswindeneinrichtung, eine Anschlusseinrichtung zur Verbindung mit einer Rotornabe der Windenergieanlage und eine mit dem Rotorblatt verbindbare Führungseinrichtung, wobei die Anschlusseinrichtung eine Seilumlenkeinrichtung zur Umlenkung von zumindest einem mit einer Rotorblattwurzel verbundenen und auf der Lastwindeneinrichtung aufgenommenen Lastseil einer Lastseilanordnung und eine Anschlageinrichtung zur Verbindung von zumindest einem auf der Führungswindeneinrichtung aufgenommenen Führungsseil einer Führungsseilanordnung der Rotornabe aufweist, derart, dass ein von der Rotornabe gelöstes Rotorblatt mittels der mit dem Rotorblatt verbundenen Führungseinrichtung längs einer zwischen der Führungswindeneinrichtung und der Anschlageinrichtung gespannten Führungsseilanordnung geführt werden kann, wobei zumindest die Führungswindeneinrichtung in ihrem Horizontalabstand zur Windenergieanlage veränderbar ist.

Im Unterschied zu konventioneller Montagetechnik, die zunächst eine Installation eines Großkrans am Montageort erforderlich macht, erfordert der Einsatz der erfindungsgemäßen Montagevorrichtung lediglich eine bodengestützte Installation einer Lastwindeneinrichtung und einer Führungswindeneinrichtung, wohingegen die im weiteren benötigten Komponenten an der Rotornabe der Windenergieanlage und am Rotorblatt montiert werden können und somit keine eigene bodengestützte Gestelleinrichtung oder dergleichen benötigen. Entsprechend ist neben dem Montageaufwand auch der für die Installation der erfindungsgemäßen Montagevorrichtung benötigte Platzbedarf in der unmittelbaren Umgebung der Windenergieanlage wesentlich geringer, als dies bei der Bereitstellung eines Großkranes der Fall ist, der zum Zugriff auf das Rotorblatt bzw. die Rotorblattwurzel eine entsprechend der Höhe der Rotornabe dimensionierte Auslegereinrichtung erforderlich macht.

Anstatt einer Auslegereinrichtung ist die erfindungsgemäße Montagevorrichtung mit einer Lastseilanordnung und einer Führungsseilanordnung versehen, die sich jeweils zwischen der Lastwindeneinrichtung und der Rotorblattwurzel bzw. zwischen der Führungswindeneinrichtung und der Rotornabe erstrecken, wobei die jeweiligen Massenkräfte der Lastseilanordnung und der Führungsseilanordnung im Wesentlichen jeweils von der am Turm der Windenergieanlage angeordneten Rotornabe aufgenommen werden. Eine entsprechende Massenabstützung am Boden, die im Falle eines Großkrans von der am Boden angeordneten Kranbasis mit entsprechend großer Kontermasse bereitgestellt werden muss, ist daher nicht erforderlich. Demzufolge kann auch auf eine Befestigung des die Windenergieanlage umgebenden Bodenbereichs, derart, dass die erforderliche Tragfähigkeit des Untergrunds sichergestellt werden kann, verzichtet werden. Vielmehr entspricht aufgrund der an der Rotornabe für die Lastseilanordnung vorgesehenen Seilumlenkeinrichtung die maximal über die Lastseilanordnung auf die Lastwindeneinrichtung wirkende Seilkraft unter Vernachlässigung von auf das Rotorblatt wirkenden Windlasten im Wesentlichen dem halben Rotorblattgewicht.

Die Führungsseilanordnung dient dazu, während der Montage oder Demontage also während der Auf- oder Abbewegung des Rotorblatts eine Bewegungsbahn des Rotorblatts zu definieren, sodass das Rotorblatt mit der Rotorblattwurzel zumindest soweit beabstandet von der Rotornabe entfernt angeordnet werden kann, dass etwaige erforderliche Wartungsarbeiten, beispielsweise eine Wartung oder Reparatur des Rotorblattlagers, durchgeführt werden kann.

Die Installation der Anschlusseinrichtung an der Rotornabe kann durch ein Seilzugangstechniker erfolgen.

Erfindungsgemäß ist die Führungswindeneinrichtung in ihrem Horizontalabstand zur Rotornabe veränderbar. Der zwischen der Führungsseilanordnung und dem Turm der Windenergieanlage ausgebildete Führungswinkel kann entsprechend dem Neigungswinkel der Anschraubfläche der Rotornabe bzw. dem Anschraubflansch des Rotorblatts gegenüber der Horizontalen gewählt werden, sodass die Führungsseilanordnung unter 90° zur Anschraubfläche angeordnet ist.

Um eine möglichst einfache Einstellung des Horizontalabstands zwischen der Führungswindeneinrichtung und der Rotornabe zu ermöglichen, kann die Führungswindeneinrichtung auf einem mobilen Windengestell angeordnet sein.

Wenn die Lastwindeneinrichtung mit der Führungswindeneinrichtung auf dem gemeinsamen Windengestell angeordnet ist, ist die Einstellung einer definierten Relativanordnung zwischen der Lastwindeneinrichtung und der Führungswindeneinrichtung unabhängig von der Beschaffenheit des die Windenergieanlage umgebenden Bodens möglich.

Vorzugsweise ist die Lastwindeneinrichtung in einem kürzeren Horizontalabstand von der Windenergieanlage angeordnet als die Führungswindeneinrichtung, sodass die Zugänglichkeit der Rotorblattwurzel des Rotorblatts in Bodennähe nicht durch die Lastwindeneinrichtung behindert wird.

Vorzugsweise weist das Windengestell eine Auflagereinrichtung zur Aufnahme der Rotorblattwurzel auf, sodass eine definierte Anordnung des Rotorblatts, sowie insbesondere der Rotorblattwurzel, am Boden möglich ist.

Wenn das Windengestell mit einer in der Masse veränderbaren Kontergewichtanordnung versehen ist, lässt sich das durch das Windengestell in Kombination mit den darauf angeordneten Windeneinrichtungen ausgebildete Kontergewicht auf die jeweiligen Erfordernisse einstellen.

Vorzugsweise umfasst die Lastwindeneinrichtung zwei Lastwinden, die jeweils zur Aufnahme eines Lastseils dienen, wobei die Lastseile jeweils über eine Seilumlenkung der Seilumlenkeinrichtung geführt und mit der Rotornabe verbunden sind, derart, dass die Lastseile jeweils mit einer in einem Anschlagpunkt einer Rotorblattwurzel angeordneten Anschlageinrichtung verbunden sind.

Diese besonders vorteilhafte Ausgestaltung der erfindungsgemäßen Montagevorrichtung ermöglicht eine Verlagerung des Schwerpunkts des Rotorblatts um eine horizontale Achse, derart, dass bei Bedarf die Parallelität zwischen der Anschraubfläche der Rotornabe und dem Anschraubflansch des Rotorblatts hergestellt werden kann.

Wenn die Lastwinden jeweils mit einer Kraftmesseinrichtung zur Messung der Seilkraft versehen sind, kann die parallele Ausrichtung des Anschraubflanschs gegenüber der Anschraubfläche der Rotornabe in Abhängigkeit von einer Seilkraftdifferenz durchgeführt werden.

Vorzugsweise ist auch die Führungswindeneinrichtung mit zwei Führungswinden versehen, die jeweils mit einer Kraftmesseinrichtung zur Messung der Seilkraft versehen sind, derart, dass sichergestellt werden kann, dass die Relativausrichtung des Rotorblatts während der Bewegungsbahn des Rotorblatts längs der Führungsseilanordnung im Wesentlichen erhalten bleibt.

Nachfolgend wird eine bevorzugte Ausführungsform der Erfindung näher erläutert.

Es zeigen:
- **Fig. 1**: Eine schematische Teildarstellung einer Windenergieanlage mit einem an einer Rotornabe montierten Rotorblatt in Seitenansicht;
- **Fig. 2**: die in **Fig. 1** dargestellte Windenergieanlage in Frontansicht;
- **Fig. 3**: die in **Fig. 1** dargestellte Windenergieanlage mit dem mittels einer Ausführungsform der Montagevorrichtung von der Rotornabe entfernten Rotorblatt;
- **Fig. 4**: die in **Fig. 3** dargestellte Windenergieanlage mit dem demontierten Rotorblatt vor einer Ablage einer Rotorblattwurzel in einer Auflagervorrichtung eines Windengestells;
- **Fig. 5**: das in **Fig. 4** dargestellte Windengestell in isometrischer Darstellung.

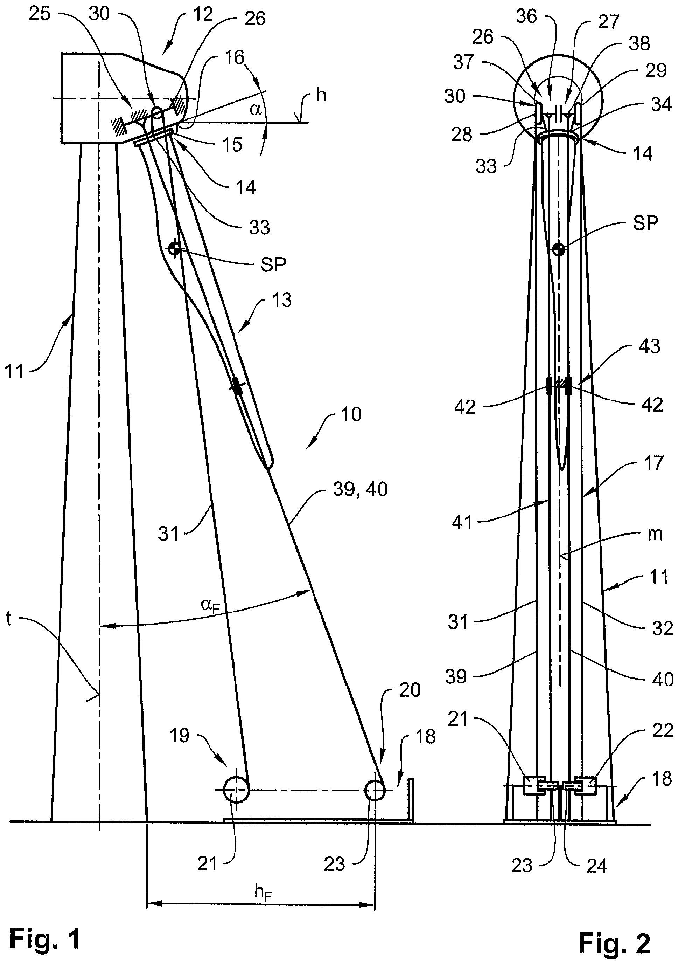

Wie aus einer Zusammenschau der **Fig. 1** und **2** ersichtlich, ist an einer Windenergieanlage eine Montagevorrichtung 10 installiert, die zur Montage oder Demontage eines an einer auf einem Turm 11 der Windenergieanlage 10 angeordneten Rotornabe 12 befestigten Rotorblatts 13 dient. Zur Befestigung des Rotorblatts 13 an der Rotornabe 12 ist ein an einer Rotorblattwurzel 14 ausgebildeter Anschraubflansch 15 mit einer Anschraubfläche 16 der Rotornabe 12 verbunden.

Die in den **Fig. 1** und **2** dargestellte Montagevorrichtung 10 weist ein am Boden benachbart dem Turm 11 der Windenergieanlage angeordnetes Windengestell 18 auf, das, wie insbesondere **Fig. 2** zeigt, eine Lastwindeneinrichtung 19 und eine Führungswindeneinrichtung 20 aufweist, wobei die Lastwindeneinrichtung 19 bei dem dargestellten Ausführungsbeispiel zwei parallel und im Wesentlichen auf einer gemeinsamen Achse angeordnete Lastwinden 21 und 22 und die Führungswindeneinrichtung 20 ebenfalls zwei und im Wesentlichen auf einer gemeinsamen Achse angeordnete Führungswinden 23 und 24 aufweist. Darüber hinaus weist die in den **Fig. 1** und **2** dargestellte Montagevorrichtung 10 eine an der Rotornabe 12 angeordnete Anschlusseinrichtung 25 auf, die im vorliegenden Fall zwei Anschlusstraversen 26, 27 umfasst, welche einander gegenüberliegend an der Rotornabe 12montiert sind und einen im Wesentlichen dem Durchmesser der Rotorblattwurzel 14 entsprechenden Abstand voneinander aufweisen. Die Anschlusstraversen 26, 27 dienen jeweils zur Anordnung einer Seilumlenkrolle 28 bzw. 29 einer Seilumlenkeinrichtung 30. Die Seilumlenkrollen 28 und 29 ermöglichen die Umlenkung eines Lastseils 31 bzw. 32 einer Lastseilanordnung 17, derart, dass die Lastseile 31 und 32 ausgehend von den Lastwinden 21 und 22 über die Seilumlenkrollen 27 und 28 bis zu Anschlagpunkten 33 und 34 an der Rotorblattwurzel 14 geführt sind.

Außer der Seilumlenkeinrichtung 30 ist im vorliegenden Fall ebenfalls an der Anschlusseinrichtung 25 eine Anschlageinrichtung 36 angeordnet, die einen Anschlagpunkt 37 an der Anschlusstraverse 26 und einem weiterem Anschlagpunkt 38 an der Anschlusstraverse 27 aufweist. Ebenso gut ist es jedoch möglich, dass die Anschlagpunkte 37, 38 der Anschlageinrichtung 36 unabhängig von den Anschlusstraversen 26, 27 an der Rotornabe 12 ausgebildet sind.

Wie insbesondere **Fig. 2** zeigt, sind die Anschlagpunkte 37, 38 jeweils über ein Führungsseil 39, 40 mit einer Führungswinde 23 bzw. 24 der Führungswindeneinrichtung 20 verbunden, wobei die Führungsseile 39, 40 der Führungsseilanordnung 41 jeweils durch eine Seilführung 42 einer mit dem Rotorblatt 13 verbundenen Führungseinrichtung 43 geführt sind.

Für den Betrieb der in den **Fig. 1** und **2** dargestellten Montagevorrichtung 10 werden die Führungsseile 39, 40, die mit den Anschlagpunkten 37, 38 der Rotornabe verbunden sind, über eine Betätigung der Führungswinden 23, 24 gespannt, wobei, wie in **Fig. 1** dargestellt, die Führungswinden 23, 24 sich in einem derartigen Horizontalabstand h_{F} vom Turm 11 befinden, dass ein zwischen der Turmachse t und den Führungsseilen 39, 40 ausgebildeter Führungsseilwinkel α_{F} dem Neigungswinkel α des an der Anschraubfläche 16 der Rotornabe 12 befestigten Anschraubflanschs 15 gegenüber der Horizontalen h entspricht.

Ausgehend von der in den **Fig. 1** und **2** dargestellten Konfiguration ist es nun nach Lösen einer hier nicht näher dargestellten Schraubverbindung zwischen dem Anschraubflansch 15 der Rotorblattwurzel 14 und der Anschraubfläche 16 der Rotornabe möglich, das Rotorblatt 13 mittels einer Betätigung der Lastwinden 21, 22 entlang einer durch die Führungsseilanordnung 41 vorgegebenen Bewegungsbahn von der Rotornabe 12 zu entfernen. Dabei kann der Neigungswinkel α des Anschraubflanschs 15 aufrechterhalten werden, sodass im Falle einer Montage des Rotorblatts 13, bei der das Rotorblatt 13 längs der durch die Führungsseilanordnung 41 definierten Bewegungsbahn gegen die Rotornabe 12 aufwärts bewegt wird, die für einen Anschluss des Anschraubflanschs 15 an die Anschlussfläche 17 der Rotornabe 12 notwendige Relativlage des Anschraubflanschs 15 sichergestellt ist.

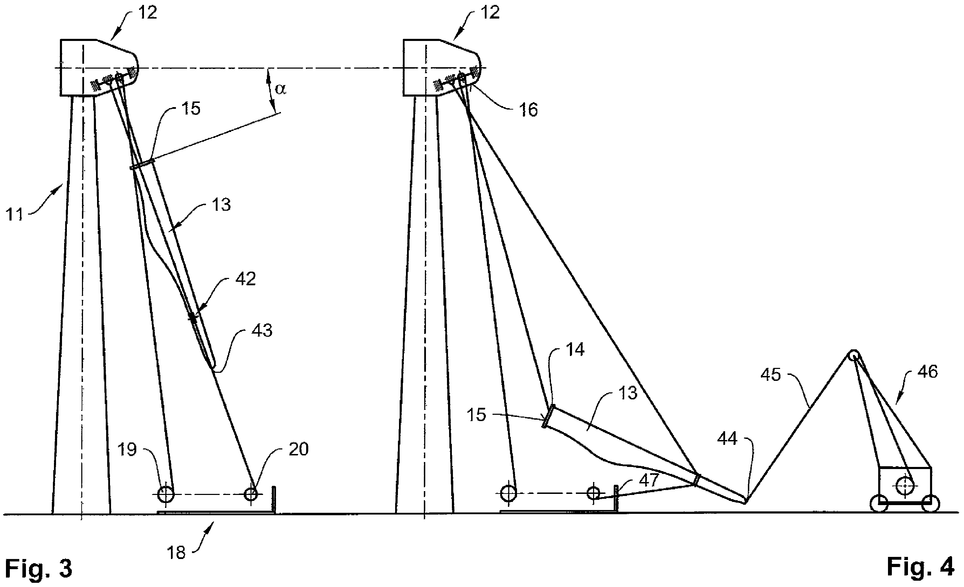

Wie eine Zusammenschau der **Fig. 3** und **4** zeigt, kann die Abwärtsbewegung des Rotorblatts 13 bei der Demontage von der Rotornabe 12 in Richtung auf den Boden fortgesetzt werden, wobei zur Lageänderung des Rotorblatts 13 als Voraussetzung für eine im Wesentlichen horizontale Lagerung des Rotorblatts 13 am Boden bei hinreichend großer Annäherung einer Rotorblattspitze 43 an den Boden ein an der Rotorblattspitze 43 vorgesehener Anschlagpunkt 44 mit einem Lageänderungsseil 45 eines mobilen Krans 46 verbunden werden kann, derart, dass bei geeigneter Abstimmung zwischen der Betätigung der Lastwindeneinrichtung 19, des Krans 46 und der Führungswindeneinrichtung 20 eine Anordnung der Rotorblattwurzel 14 in einer am Windengestell 18 ausgebildeten Auflagereinrichtung 47 erfolgen kann.

In der somit erreichten Bodenposition des Rotorblatts 13 können alle notwendigen Wartungs- oder Reparaturarbeiten, wie insbesondere eine Reparatur oder Wartung eines an der Rotorblattwurzel 14 angeordneten Rotorblattlagers, durchgeführt werden.

Wie insbesondere in **Fig. 2** beispielhaft dargestellt, weist das Rotorblatt 13 aufgrund der sich in Längsrichtung des Rotorblatts 13 ändernden Profilierung einen gegenüber der Längsachse des Rotorblatts 13 versetzten Schwerpunkt SP auf, der dazu führt, dass zur Beibehaltung der in **Fig. 2** dargestellten senkrechten Ausrichtung des Rotorblatts 13 nach einem Lösen der Verbindung zwischen dem Anschraubflansch 15 der Rotorblattwurzel 14 und der Anschraubfläche 16 der Rotornabe 12 unterschiedlich große Seilkräfte in den Lastseilen 31 und 32 erforderlich sind bzw. um die Verbindung zwischen dem Rotorblatt 13 und der Rotornabe 12 ohne Lageabweichungen zwischen dem Anschraubflansch 15 und der Anschraubfläche 16 nach erfolgter Wartung oder Reparatur wieder herstellen zu können. Hierzu ist es notwendig, die Lastwinden 21, 22 der Lastwindenanordnung so anzusteuern, dass sich die erforderliche Seilkraftverteilung einstellt.

Eine vorteilhafte Möglichkeit, die Lastwinden mit einer geeigneten Sensorik zu versehen, besteht darin, die Lastwinden 21, 22 jeweils auf einer nicht näher dargestellten Gelenkwippe anzuordnen, die mit einer Druckmessdoseneinrichtung zusammenwirkt, so dass Ausgangssignale der Druckmessdosen zur Ansteuerung der Winden verwendet werden können. Eine entsprechende Ausstattung kann sich auch bei den Führungswinden 23, 24 als vorteilhaft erweisen, um bezogen auf die Längsachse des Rotorblatts 13 durch unterschiedliche Seilkräfte in den Führungsseilen 39, 40 eine definierte Drehlage des von der Rotornabe 12 gelösten Rotorblatts 13 einzustellen und somit eine zur Herstellung der Verbindung zwischen dem Anschraubflansch 15 und der Anschraubfläche 16 geeignete Relativpositionierung zu gewährleisten.

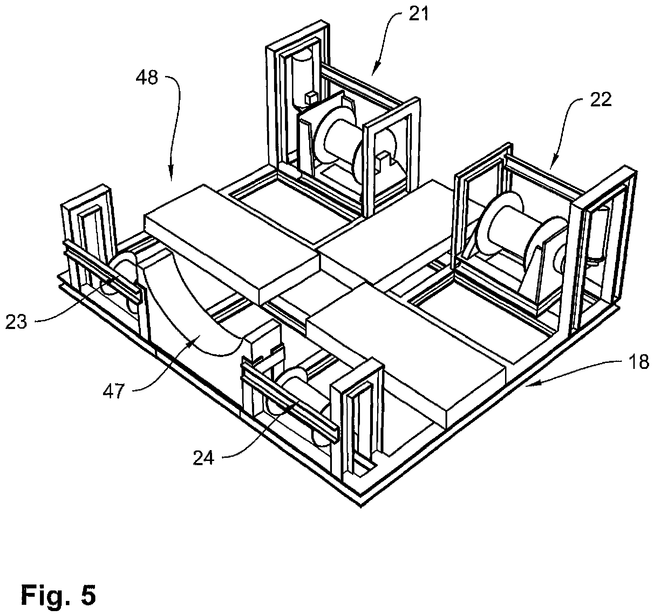

Wie **Fig. 5** zeigt, dient das Windengestell 18 nicht nur zur Anordnung bzw. Relativanordnung der Lastwinden 21, 22 und der Führungswinden 23, 24, sondern darüber hinaus zur Anordnung der Auflageeinrichtung 47 und zur Anordnung einer Kontergewichtanordnung 48, die einen Masseausgleich für das Rotorblatt 13 bildet. Die Kontergewichtanordnung 48 kann individuell an das jeweilige Rotorblattgewicht angepasst werden.

## Patentansprüche

1. Montagevorrichtung (10) für Rotorblätter (13) einer Windenergieanlage mit einer Lastwindeneinrichtung (19), einer Führungswindeneinrichtung (20), einer Anschlusseinrichtung (25) zur Verbindung mit einer Rotornabe (12) der Windenergieanlage und einer mit dem Rotorblatt (13) verbindbaren Führungseinrichtung (35), wobei die Anschlusseinrichtung (25) eine Seilumlenkeinrichtung (30) zur Umlenkung von zumindest einem mit einer Rotorblattwurzel (14) verbundenen und auf der Lastwindeneinrichtung (19) aufgenommenen Lastseil (31, 32) einer Lastseilanordnung (17) und eine Anschlageinrichtung (36) zur Verbindung von zumindest einem auf der Führungswindeneinrichtung (20) aufgenommenen Führungsseil (39, 40) einer Führungseilanordnung (41) mit der Rotornabe (12) aufweist,
**dadurch gekennzeichnet,**
**dass** ein von der Rotornabe (12) gelöstes Rotorblatt (13) mittels der mit dem Rotorblatt (13) verbundenen Führungseinrichtung (35) längs einer zwischen der Führungswindeneinrichtung (20) und der Anschlageinrichtung (36) gespannten Führungsseilanordnung (41) geführt werden kann, wobei zumindest die Führungswindeneinrichtung (20) in ihrem Horizontalabstand h_{F} zur Windenergieanlage veränderbar ist.

2. Montagevorrichtung nach Anspruch 1,
**dadurch gekennzeichnet,**
**dass** die Führungswindeneinrichtung (20) auf einem mobilen Windengestell (18) angeordnet ist.

3. Montagevorrichtung nach Anspruch 2,
**dadurch gekennzeichnet,**
**dass** die Lastwindeneinrichtung (19) zusammen mit der Führungswindeneinrichtung (20) auf dem gemeinsamen Windengestell (18) angeordnet ist.

4. Montagevorrichtung nach einem der vorangehenden Ansprüche, **dadurch gekennzeichnet,**
**dass** die Lastwindeneinrichtung (19) in einem kürzeren Horizontalabstand von der Windenergieanlage angeordnet ist als die Führungswindeneinrichtung (20).

5. Montagevorrichtung nach einem der Ansprüche 2 bis 4,
**dadurch gekennzeichnet,**
**dass** das Windengestell (18) eine Auflagereinrichtung (47) zur Aufnahme der Rotorblattwurzel (14) aufweist.

6. Montagevorrichtung nach einem der Ansprüche 2 bis 5,
**dadurch gekennzeichnet,**
**dass** das Windengestell (18) mit einer in der Masse veränderbaren Kontergewichtanordnung (48) versehen ist.

7. Montagevorrichtung nach einem der vorangehenden Ansprüche, **dadurch gekennzeichnet,**
**dass** die Lastwindeneinrichtung (19) zwei Lastwinden (21, 22) umfasst, die jeweils zur Aufnahme eines Lastseils (31, 32) dienen, wobei die Lastseile (31, 32) jeweils über eine Seilumlenkung der Seilumlenkeinrichtung (30) geführt und mit der Rotornabe (12) verbunden sind, derart, dass die Lastseile (31, 32) jeweils mit einer in einem Anschlagpunkt (33, 34) an der Rotorblattwurzel (14) angeordneten Anschlageinrichtung (36) verbunden sind.

8. Montagevorrichtung nach Anspruch 7,
**dadurch gekennzeichnet,**
**dass** die Lastwinden (21, 22) jeweils mit einer Kraftmesseinrichtung zur Messung der Seilkraft versehen sind.

9. Montagevorrichtung nach Anspruch 8,
**dadurch gekennzeichnet,**
**dass** die Führungswindeneinrichtung (20) zwei Führungswinden (23, 24) umfasst, die jeweils mit einer Kraftmesseinrichtung zur Messung der Seilkraft versehen sind.

## Claims

1. A mounting device (10) for rotor blades (13) of a wind energy plant, the mounting device (10) comprising a load winch mechanism (19), a guide winch mechanism (20), a connecting mechanism (25) for being connected to a rotor hub (12) of the wind energy plant, and a guiding mechanism (35) configured to be connected to the rotor blade (13), the connecting mechanism (25) having a cable deflector (30) for deflecting at least one load cable (31, 32) of a load cable assembly (17), the load cable (31, 32) being connected to a rotor blade root (14) and accommodated on the load winch mechanism (19), and a stop mechanism (36) for connecting at least one guide cable (39, 40) of a guide cable assembly (41) to the rotor hub (12), the guide cable (39, 40) being accommodated on the guide winch mechanism (20),
**characterized in that**
a rotor blade (13) detached from the rotor hub (12) can be guided along a guide cable assembly (41), which runs between the guide winch mechanism (20) and the stop mechanism (36), by means of the guiding mechanism (35) connected to the rotor blade (13), at least the guide winch mechanism (20) being adjustable in its horizontal distance h_{F} from the wind energy plant.

2. The mounting device according to claim 1,
**characterized in that**
the guide winch mechanism (20) is disposed on a mobile winch frame (18).

3. The mounting device according to claim 2,
**characterized in that**
the load winch mechanism (19) is disposed on the shared winch frame (18) together with the guide winch mechanism (20).

4. The mounting device according to any one of the preceding claims, **characterized in that**
the load winch mechanism (19) is disposed at a shorter horizontal distance from the wind energy plant than the guide winch mechanism (20).

5. The mounting device according to any one of claims 2 to 4,
**characterized in that**
the winch frame (18) has a support (47) for accommodating the rotor blade root (14).

6. The mounting device according to any one of claims 2 to 5,
**characterized in that**
the winch frame (18) is provided with a counterweight assembly (48) adjustable in mass.

7. The mounting device according to any one of the preceding claims, **characterized in that**
the load winch mechanism (19) comprises two load winches (21, 22) each serving to accommodate one load cable (31, 32), the load cables (31, 32) each being guided across a cable deflection of the cable deflector (30) and being connected to the rotor hub (12) in such a manner that the load cables (31, 32) are each connected to a stop mechanism (36) disposed on the rotor blade root (14) in a stop point (33, 34).

8. The mounting device according to claim 7,
**characterized in that**
the load winches (21, 22) are each provided with a force measuring device for measuring the cable force.

9. The mounting device according to claim 8,
**characterized in that**
the guide winch mechanism (20) comprises two guide winches (23, 24) each provided with a force measuring device for measuring the cable force.

## Revendications

1. Dispositif de montage (10) pour des pales de rotor (13) d'une éolienne, le dispositif de montage (10) comprenant un moyen de treuil de charge (19), un moyen de treuil de guidage (20), un moyen de liaison (25) destiné à être lié à un moyeu de rotor (12) de l'éolienne et un moyen de guidage (35) configuré pour être lié à la pale de rotor (13), le moyen de liaison (25) ayant un moyen de déviation de câble (30) destiné à dévier au moins un câble de charge (31, 32) d'un ensemble de câbles de charge (17), le câble de charge (31, 32) étant lié à un pied de pale de rotor (14) et logé sur le moyen de treuil de charge (19), et un moyen d'arrêt (36) pour lier au moins un câble de guidage (39, 40) d'un ensemble de câbles de guidage (41) au moyeu de rotor (12), le câble de guidage (39, 40) étant logé sur le moyen de treuil de guidage (20),
**caractérisé en ce**
**qu'**une pale de rotor (13) détachée du moyeu de rotor (12) peut être guidée le long d'un ensemble de câbles de guidage (41), qui s'étend entre le moyen de treuil de guidage (20) et le moyen d'arrêt (36), au moyen du moyen de guidage (35) lié à la pale de rotor (13), au moins le moyen de treuil de guidage (20) étant ajustable en distance horizontale h_{F} de l'éolienne.

2. Dispositif de montage selon la revendication 1,
**caractérisé en ce que**
le moyen de treuil de guidage (20) est disposé sur un cadre de treuil (18) mobile.

3. Dispositif de montage selon la revendication 2,
**caractérisé en ce que**
le moyen de treuil de charge (19) est disposé sur le cadre de treuil (18) commun conjointement avec le moyen de treuil de guidage (20).

4. Dispositif de montage selon l'une quelconque des revendications précédentes,
**caractérisé en ce que**
le moyen de treuil de charge (19) est disposé à une distance horizontale plus courte de l'éolienne que le moyen de treuil de guidage (20).

5. Dispositif de montage selon l'une quelconque des revendications 2 à 4,
**caractérisé en ce que**
le cadre de treuil (18) a un support (47) pour loger le pied de pale de rotor (14).

6. Dispositif de montage selon l'une quelconque des revendications 2 à 5,
**caractérisé en ce que**
le cadre de treuil (18) est muni d'un ensemble de contrepoids (48) ajustable en masse.

7. Dispositif de montage selon l'une quelconque des revendications précédentes,
**caractérisé en ce que**
le moyen de treuil de charge (19) comprend deux treuils de charge (21, 22) servant chacun à supporter un câble de charge (31, 32), les câbles de charge (31, 32) étant guidés chacun par une déviation de câble du moyen de déviation de câble (30) et étant liés au moyeu de rotor (12) de telle manière que les câbles de charge (31, 32) sont liés chacun à un moyen d'arrêt (36) disposé sur le pied de pale de rotor (14) dans un point d'arrêt (33, 34).

8. Dispositif de montage selon la revendication 7,
**caractérisé en ce que**
les treuils de charge (21, 22) sont munis chacun d'un dispositif de mesure de force destiné à mesurer la force de câble.

9. Dispositif de montage selon la revendication 8,
**caractérisé en ce que**
le moyen de treuil de guidage (20) comprend deux treuils de guidage (23, 24) munis chacun d'un dispositif de mesure de force destiné à mesurer la force de câble.
